# EUROPEAN PATENT SPECIFICATION

(11) **EP 2 630 785 B1**
(45) Date of publication and mention of the grant of the patent: **19.09.2018**
(21) Application number: 11781669.4
(22) Date of filing: 24.10.2011
(51) Int. Cl.: H04N 5/225, H04N 5/232, H04N 9/04

(54) **SYSTEM AND METHOD FOR IMAGING USING MULTI APERTURE CAMERA**
SYSTEM UND VERFAHREN ZUR ABBILDUNG MIT EINER KAMERA MIT MEHREREN BLENDEN
SYSTÈME ET PROCÉDÉ DE FORMATION D'IMAGE AU MOYEN D'UN APPAREIL PHOTO À OUVERTURES MULTIPLES

(30) Priority: 24.10.2010 US 406148 P
(43) Date of publication of application: 28.08.2013
(73) Proprietor: Apple Inc., Cupertino CA 95014 (US)
(72) Inventor: ATTAR, Ziv, IL-30900 Zihron Yaakov (IL); AHARON-ATTAR, Chen, IL-30900 Zihron Yaakov (IL)
(74) Representative: Rooney, John-Paul
(86) International application number: PCT/NL2011/050723
(87) International publication number: WO 2012/057620

(56) References cited:
- WO-A1-2010/078563
- WO-A2-2009/151903
- WO-A2-2009/151903
- JP-A- 2000 152 281
- JP-A- 2007 158 825
- JP-A- 2010 004 090
- JP-A- 2010 004 090
- M. MIROTZNIK ET AL: "A practical enhanced-resolution integrated optical-digital imaging camera (PERIODIC)", PROCEEDINGS OF SPIE, vol. 7348, 1 January 2009 (2009-01-01), pages 734806-734806-9, XP055015831, ISSN: 0277-786X, DOI: 10.1117/12.819484

## Description

The present invention relates to a system and method for improving the spatial resolution of digital cameras that consist of multiple imaging lens assemblies (hereinafter: imaging channels) and at least one sensor that can be divided in to two or more regions. The imaging lenses are designed to have the same field of view but different geometric distortion as a function of field of view. The final processed image is composed of details obtained by different imaging channels. Each imaging channel provides luminance details for different areas of the final image while all imaging channels provide chrominance (color details) of the complete scene. As a result of the distortion variation, each channel has an area where the magnification of some areas in the scene is higher. The present invention relates generally to a system and method for capturing an image, and more particularly to an advanced imaging systems having more than one aperture.

### BACKGROUND OF THE INVENTION

US 2001/0134282 relates to an imaging device, comprising: a lens array including a plurality of lenses facing a subject; an image sensor obtaining a compound-eye image including single-eye images of the subject formed by the lenses; and a computing unit processing the compound-eye image obtained by the image sensor, wherein the lenses have different radii of curvature and substantially a same back focal length; and the computing unit extracts an in-focus image from the compound-eye image. The imaging unit also includes light-shielding walls for preventing crosstalk between light beams passing through adjacent lens sets of the lens array. The imaging unit also includes an image sensor such as a CMOS sensor that converts optical images of the subject formed by the lens sets of the lens array into an image signal (data), wherein the image sensor is mounted on a substrate. Lens surfaces of the lens sets of the lens array have different radii of curvature so that the lens sets focus at different subject distances. In addition to setting the radii of curvature as described above, the lens sets are configured to have substantially the same back focal length.

International application WO 2009/151903 relates to camera array fabricated on a semiconductor substrate to include a plurality of sensor elements, comprising: a first imager fabricated at a first location of the semiconductor substrate, the first imager including at least two first image sensor elements; and a second imager fabricated on a second location of the semiconductor substrate, the second imager including at least two second image sensor elements not overlapping with first image sensor elements. International application WO 2009/151903 relates to using a distributed approach to capturing images using a plurality of imagers of different imaging characteristics wherein each imager may be spatially shifted from another imager in such a manner that an imager captures an image that us shifted by a sub-pixel amount with respect to another imager captured by another imager. Each imager may also include separate optics with different filters and operate with different operating parameters (e.g., exposure time). Particularly, WO 2009/151903 discloses a camera array including two or more subsets of imagers equipped with lenses having different magnifications in a central area of the field of view to provide differing zoom magnifications. Distinct images generated by the imagers are processed to obtain an enhanced image. Particularly, an image with higher spatial resolution can be generated.

Each imager may be associated with an optical element fabricated using wafer level optics (WLO) technology. WO 2009/151903 fails to disclose a camera array including two subsets of imagers equipped with lenses having higher magnifications at different areas of the field of view. US 2011/0080487 relates to an imaging device comprising at least one imager array, and each imager in the array comprises a plurality of light sensing elements and a lens stack including at least one lens surface, where the lens stack is configured to form an image on the light sensing elements, wherein a spectral filter is provided within each imager and is configured to pass a specific spectral band of light; and spectral filters that pass different spectral bands are provided within at least two of the imagers. In addition, US 2011/0080487 also discloses that at least one lens surface in the optical stack of an imager differs based upon the specific spectral band of light passed by the spectral filter within the imager; and each lens surface is selected from the group consisting of diffractive, Fresnel, refractive and combinations thereof, wherein each of the imagers is optically separated from the other imagers by at least two opaque surfaces located in front of the light sensing elements and having openings arranged in axial alignment with the lens stack of the imager.

US 2005/0225654 relates to a color camera, including at least three sub-cameras, each sub-camera having an imaging lens, a color filter, and an array of detectors, wherein filters associated with a color set are substantially the same. The color camera combines images from the at least three sub-cameras to form a composite multi-color image, at least two of the at least three sub-cameras each generate an image for a substantially same color spectra, the at least two images for the substantially same color spectra having a variation there between to provide a resolution of a composite image for the substantially same color spectra which is higher than that of an individual sub-camera, a resolution of a color image not having the substantially same color spectra being less than the resolution of the composite image.

JP2011109484 relates to a multiple-lens camera apparatus with which several image area, the color filter of each color positioned for this every imaging region, and the lens array to which it corresponded for this every imaging region wherein the multiple-lens camera apparatus with which the focal distances with respect to this imaging region of at least two sub lenses of this lens array mutually differ.

An imaging system typically consists of an imaging lens and a detecting sensor. An imaging lens collects light emitted or reflected from objects in a scene and images this light onto a detector. A detector is a photosensitive device, which converts light in to electronic signal later forming a digital image. To photograph a color image a color filter must be used to separate between different spectral regions of the total spectrum that is being imaged.

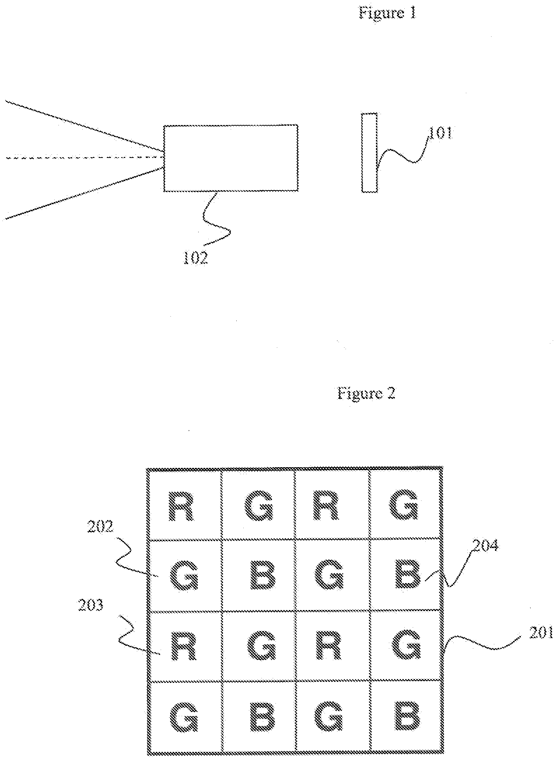

A common filter that is used is called a Bayer mask which is a mask that is positioned on top of the detecting surface and allows different spectra (colors) to reach different pixels on the detector, for example a Bayer filter is composed of one green pixel mask followed by a red pixel mask followed on the row below by a blue pixel mask and finally another green pixel mask. The image that will be taken using the configuration according to present Figure 2 needs to be processed in order to separate the green, red and blue images.
Using a color mask such as a Bayer mask requires the use of a standard single lens having sufficient resolution and performance at all 3 colors used by the color mask (Red Green and Blue in the case of a Bayer mask but other color combinations can be used having different spectrum filters placed in different pixel location).

A phenomena caused by the use of color mask is the appearance of color artifacts also caused by the spatial disposition of the different colors. For example imaging a white line on black background having spatial resolution of Nyquist meaning 1 rows of pixels is white and the adjacent row is black will appear as different color lines depending on the position of the lines on the sensor. Given the sensors active area dimension (also known as format) and the desired field of view, the focal length of the lens can be calculated. The size of the aperture of the lens which determines the lens ability to collect light is also set according to sensors photo sensitivity, exposure time and acceptance of noise levels in the captured images. The focal length divided by the aperture's size is called F-Number and indicates the lens ability to collect light from a scene. The lower the F-Number is the more light the lens will be able to deliver to the sensor plane.

JP 2010 004090 A is also thought to be relevant and provides an imaging apparatus which is easily attached on a vehicle and can measure distance with a single eye.

### SUMMARY OF THE INVENTION

An object of the present invention is to overcome the loss of effective resolution originating from the partial use of the sensor active area by each imaging.

The present invention relates generally to a system and method for capturing an image, and more particularly to an advanced system employing a multi aperture camera. More in detail the present invention relates to a system for improving image spatial resolution using a multi aperture digital camera having at least two different geometric distortion as a function of field, of lenses of the different imaging channels.

The term multi aperture digital camera as referred to means a camera that consists of more than one imaging lenses each having its aperture and lens elements. The term at least two different geometric distortion as referred to means that at least two of the multiple apertures are designed differently and demonstrate a different behavior of the variation of focal length across its field of view. The term lenses of the different imaging channels as referred to means any imaging lens that may consist of one or more optical surfaces having an optical power that is different than zero. The term image spatial resolution as referred to means the ability of lens to create an image which can resolve details that have a size of 1/f in which f is the spatial resolution.

The present inventors found that the image spatial resolution can by improved by using a multi aperture camera as recited in the appended claim and sub claims.

When using multi aperture digital cameras, each lens forms an image that is smaller than the size of the sensor or total size of sensors. The resulting products of such a multi aperture digital camera are multiple images that have lower effective resolution, lower than an image captured by a single aperture lens using the same sensor or a single sensor having a pixel count that is equal to the sum of the plurality of sensors.

This reduction of resolution can be compensated by use of more pixels but this solution leads to higher price and larger dimensions, which is undesirable in most cases.

The present invention proposes an alternative solution that allows increasing the effective resolution of a multi aperture camera without the need of using a sensor with more pixels.

The present invention thus relates to the use of a multi aperture digital camera having at least two different geometric distortion, as a function of field, of lenses of the different imaging channels for improving image spatial resolution.

In an imaging system containing multi apertures as described above we will address herein after each lens and the area of the sensor in which the lens forms an image on as an imaging channel.

The digital camera is composed of two or more imaging channels where the imaging lens of each channel can be different than the imaging lens of other channels.

The focal length of a lens is defined by the distance in which the lens will form an image of an object that is positioned at infinity.

When imaging an object positioned at a finite distance the image will be formed at a different distance from the lens.

The focal length of a lens also defines the magnification of the object to the image plane. Longer focal length corresponds to higher magnification causing an object with a given size and distance to image on a larger area and therefor more pixels.
An ideal lens has constant magnification and focal length across its field of view but an actual lens typically demonstrates optical distortion which is defined as the change of the magnification across the field of view of the lens. For actual lenses having distortion the focal length is typically defined for the center of the field of view also commonly called 'on-axis'.

Imaging lenses that consist of lens elements that are rotational symmetric will demonstrate a distortion graph that is symmetric around the optical axis of the lens. Positive distortion at a certain region of the field of view indicates that the focal length at this region is higher than it is at the center of the field of view. Respectively negative distortion at a certain region of the field of view indicates that the focal length at the said region is shorter than at the center of the field of view.

In a system containing multi lenses for imaging the same scene on to a sensor or sensors using different chromatic filtering or with no chromatic filtering, it is proposed to use lenses with different geometric distortion as a function of field of view. Each lens will be designed to have a longer focal length at a different region of the scene. Using a special algorithm for combining the details captured by all or some of the lenses and their corresponding areas on the sensor will result in a digital image of the complete scene with high resolution over the complete field of view.

Using the proposed method above results in a high-resolution image that was composed by extracting specific areas from different channels. The high-resolution image that was composed can be a monochrome image. Converting this image into a color image requires extraction of the color information for each pixel or pixel groups from some or all of images.

Dividing an image into color data also known as chrominance and intensity data also known as luminance is achieved using the stitched monochrome image as the luminance source for each pixel and using information from images from 3 or more different channels.

The present invention relates to a system and method which may be applied to a variety of imaging systems. This system and method provide high quality imaging while considerably reducing the length of the camera as compared to other systems and methods.

Specifically, the object of the present invention is to provide a system and a method to improve image capturing devices while maintaining the same filed of view. This is accomplished by using a two or more lenses. Each lens forms a small image of the scene. Each lens transfers light emitted or reflected from objects in the scenery onto a proportional area in the detector. The optical track of each lens is proportional to the segment of the detector which the emitted or reflected light is projected on. Therefore, when using smaller lenses, the area of the detector which the emitted or reflected light is projected on, referred hereinafter as the active area of the detector, is smaller. When the detector is active for each lens separately, each initial image formed is significantly smaller as compare to using one lens which forms an entire image. One lens camera transfers emitter or reflected light onto the entire detector area.

Therefore instead of using a single lens to form a large image covering the complete sensor active area, we propose to use two or more lenses where each form a small image covering only a part of the sensor's active area. The sensor that will be used will not have any color mask on its active area and instead each lens will have a color filter integrated within the optical barrel or in front of the lens (between the lens and the scene) or between the lens and the sensor or placed on top of the sensor part that is used with the specific lens.

The invention will be more clearly understood by reference to the following description of preferred embodiments thereof read in conjunction with the figures attached hereto. In the figures, identical structures, elements or parts which appear in more than one figure are labeled with the same numeral in all the figures in which they appear. Dimensions of components and features shown in the figures are chosen for convenience and clarity of presentation and are not necessarily shown to scale. The figures are listed below.

### BRIEF DESCRIPION OF THE DRAWINGS

Figure 1 illustrates a side view of a single lens camera.
Figure 2 illustrates a sensor array (201) having multiple pixels.
Figure 3 illustrates a side view of a three lens camera having one sensor and three lenses.
Figure 4 illustrates an example of a scene as projected on to the sensor.
Figure 5 illustrates a front view of a three lens camera using one rectangular sensor divided in to three regions.
Figure 6 illustrates a front view of a three lens camera having one sensor, one large lens and two smaller lenses.
Figure 7 illustrates a front view of a four lens camera having a one sensor and four lenses.
Figure 8 illustrates a 16 lens camera having four regions each containing four lenses as illustrated in figure 7.
Figure 9 illustrates the focal length variation as a function of field of view for the three lenses of the first embodiment.
Figure 10 illustrates the focal length variation as a function of field of view for the two lenses of the third embodiment.
Figure 11 schematically shows an embodiment of a section of multi aperture digital camera.
Figure 12 schematically shows an exploded view of the individual parts shown in Figure 11.
Figure 13A schematically shows individual lens elements in a 2x2 array.
Figure 13B schematically shows a top view of the 2x2 array shown in Figure 13A.
Figure 14A schematically shows one lens element in a 2x2 integrated lens element.
Figure 14B schematically shows a top view of the integrated 2x2 array shown in Figure 14A.
Figures 15A, 16A, and 17A, 18, 19 schematically show a construction of different sizes of lenses in a lens array.
Figures 15B, 16B, and 17B schematically show the sensors to be used in connection with the lenses shown in Figures 15A, 16A, and 17A, respectively.
Figures 20, 21, 22, and 23 schematically show different embodiments of a section of multi aperture digital camera.

Figure 1 illustrates a side view of a single lens camera having a single lens (102) that can compromise one or more elements and a single sensor (101).

Figure 2 illustrates a sensor array (201) having multiple pixels where the position of the green filter, red filter and blue filter are marked by (202), (203) and (204) respectively.

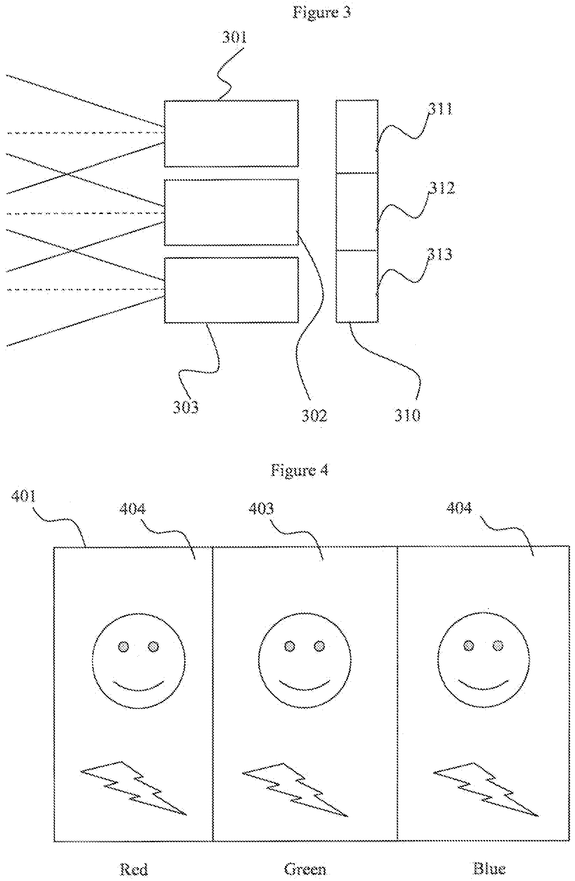

Figure 3 illustrates a side view of a three lens camera having one sensor (310) and three lenses (301), (302) and (303). Each one of the said lens will project the image of the same scene on to segments of the sensor marked by (311), (312), and (313) respectively. Each one of the three lenses will have different color filters integrated within the lens, in front of it or between the lens and sensor (310).

Using the described configuration the image acquired by the sensor will be composed of two or more smaller images, each imaging information from the scene at different spectrums.

Figure 4 illustrates an example of a scene as projected on to the sensor (401), in each region of the sensor (402), (403) and (404) the same scene is projected but each region will contain information for light at different wavelengths representing different colors according to the filters integrated within the lens that forms the image on each region.

The described configuration does not require the use of a color mask and therefore the maximal spatial frequency that can be resolved by the sensor is higher, on the other hand using smaller lens and smaller active area per channel necessarily means that the focal length of the lens is smaller and therefore the spatial resolution in objects space is decreased. Overall the maximal resolvable resolution for each color remains same.

The image acquired by the sensor is composed of two or smaller images, each containing information of the same scene but in different colors. The complete image is then processed and separated in to 3 or more smaller images and combined together to one large color image.

The described method of imaging has many advantages:
1. Shorter lens track (height) as each one of the lens used is smaller in size than the single lens covering the same field of view, the total track (height) of each lens is smaller allowing the camera to be smaller in height, an important factor for mobile phone cameras, notebook cameras and other applications requiring short optical track.
2. Reduced Color artifacts- Since each color is captured separately, artifacts originating from spatial dependency of each color in a color mask will not appear.
3. Lens requirements: each lens does not have to be optimal for all spectrums used but only for one spectrum, allowing simplifying the lens design and possibly decreasing the amount of elements used in each lens as no color correction is needed.
4. Larger Depth of Focus: the depth of focus of a system depends on its focal length. Since we use smaller lenses with smaller focal lengths, we increase the depth of focus by the scale factor squared.
5. Elimination of focus mechanism: focus mechanisms change the distance between the lens and the sensor to compensate for the change in object distance and to assure that the desired distance is in focus during the exposure time. Such a mechanism is costly and has many other disadvantages such as:
   a. Size
   b. Power consumption
   c. Shutter lag
   d. Reliability
   e. price

Using a fourth lens in addition to the three used for each color red, green and blue (or other colors) with a broad spectral transmission can allow extension of the sensor's dynamic range and improve the signal-to-noise performance of the camera in low light conditions.

All configuration described above using a fourth lens element can be applied on other configurations having two or more lenses.

Another configuration that is proposed is using two or more lenses with one sensor having a color mask integrated or on top of the sensor such as a Bayer mask. In such a configuration no color filter will be integrated in to each lens channel and all lenses will create a color image on the sensor region corresponding to the specific lens. The resulting image will be processed to form one large image combining the two or more color images that are projected on to the sensor.

### Three lens camera:

Dividing the sensor's active area in to 3 areas, one for each color Red, Green and Blue (or other colors) can be achieved by placing 3 lenses one beside the other as described in the drawing below:
The resulting image will consist of 3 small images were each contains information of the same scene in different color.
Such a configuration will comprise of 3 lenses where the focal length of each lens is 4/9 of an equivalent single lens camera that uses a color filter array, these values assume a 4:3 aspect ratio sensor.

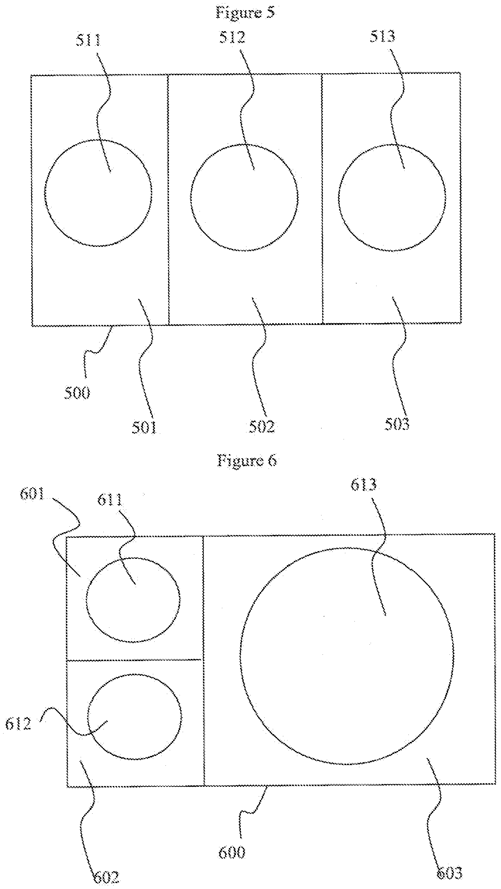

Figure 5 illustrates a front view of a three lens camera using one rectangular sensor (500) divided in to three regions (501), (502) and (503). The three lenses (511), (512) and (513) each having different color filters integrated within the lens, in front of the lens or between the lens and the sensor are used to form an image of the same scene but in different colors. In This example each region of the sensor (501), (502) and (503) are rectangular having the longer dimension of the rectangle perpendicular to the long dimension of the complete sensor.

Other three lens configuration can be used, such as using a larger green filtered lens and two smaller lenses for blue and red, such a configuration will results in higher spatial resolution in the green channel since more pixels are being used.

Figure 6 illustrates a front view of a three lens camera having one sensor (600), one large lens (613) and two smaller lenses (611) and (612). The large lens (613) is used to form an image on the sensor segment marked (603) while the two smaller lenses form an image on the sensor's segments marked with (601) and (602) respectively. The larger lens (613) can use a green color filter while the two smaller lenses (611) and (612) can use a blue and red filter respectively. Other color filters could be used for each lens.

### Four lens camera:

A four lens camera will comprise of 4 lenses each having different color filter integrated within the lens, before the lens or between the lens and the sensor region corresponding to the said lens.

The color filters use for each lens can be partially repeated meaning a specific color filter can appear twice causing 2 of the 4 lens to image the same scene and at the same spectrum.

Figure 2 illustrates a front view of 4 lens camera having one sensor (200), four lenses (211-214) while each lens form an image on a corresponding segment of the sensor marked by (201-204) respectively.

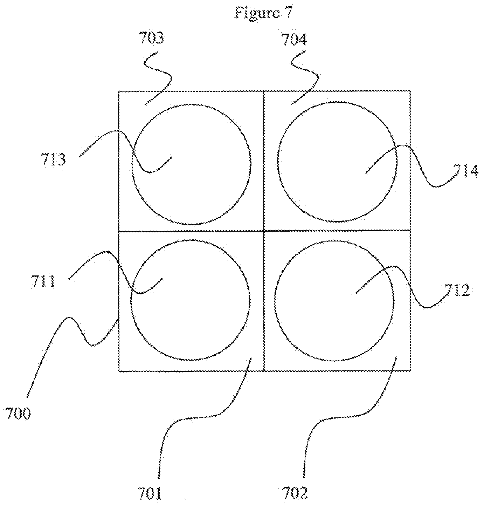

Figure 7 illustrates a front view of a four lens camera having a one sensor (700) and four lenses (711), (712), (713) and (714). Each lens forms an image on the corresponding sensor region marked with (701), (702), (703) and (704) respectively. Each one of the lenses will be integrated with a color filter in side the lens, in front of the lens or between the lens and the sensor. All four lenses could be integrated with different color filter or alternatively two of the four lenses could have the same color filter integrated in side the lens, in front of the lens or between the lens and the sensor. For example using two green filters one blue filter and one red filter will allow more light collection in the green spectrum.

### MxN lens camera:

Using M and /or N larger than 2 allows higher shortening factor and higher increase in depth of focus.

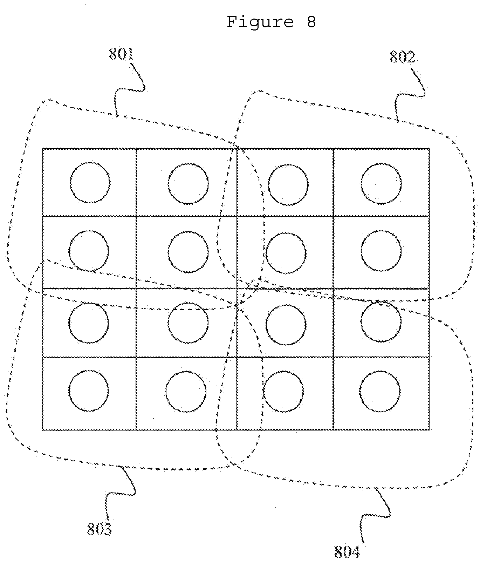

Figure 8 illustrates a 16 lens camera having 4 regions (801), (802), (803) and (804) each containing four lenses as illustrated in figure 7.

### DETAILED DESCRIPTION OF THE PREFERRED EMBODIMENT AND OTHER EXEMPLARY EMBODIMENTS

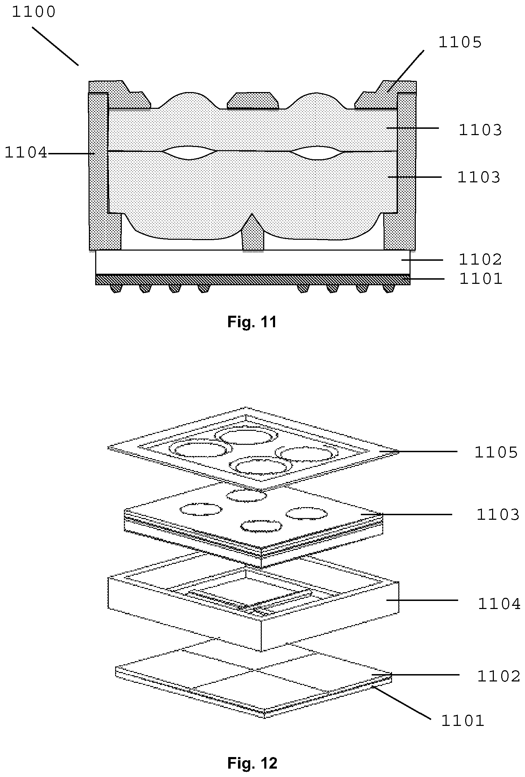

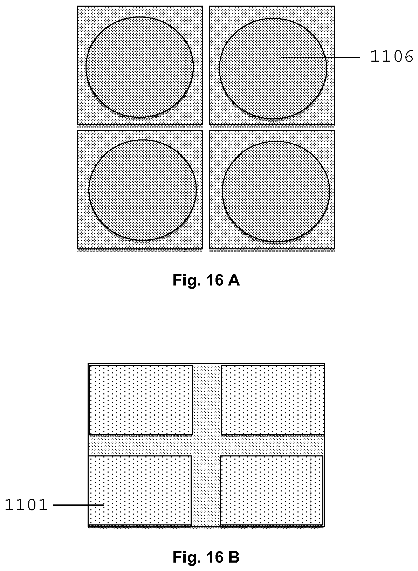

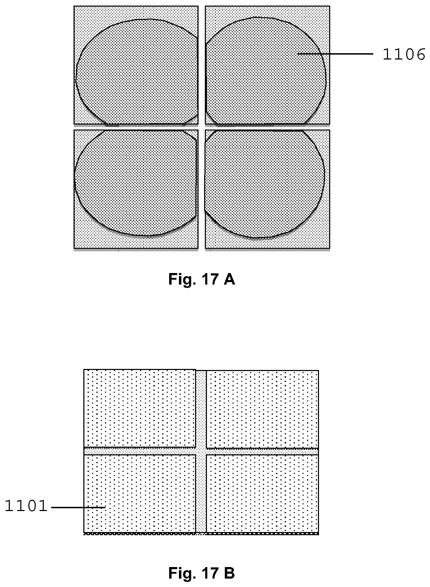

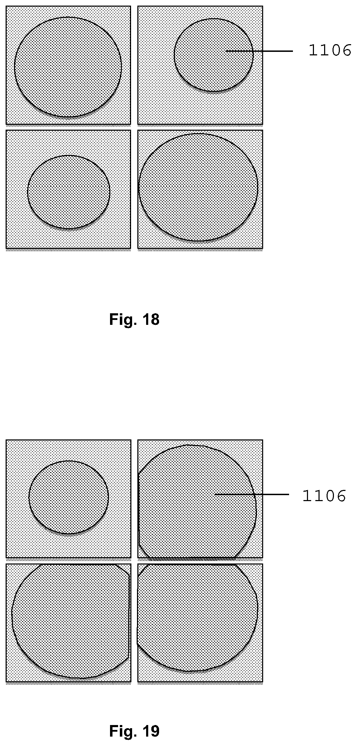

The second method for creating the luminance matrix of the first, second and third embodiments is covered by the claims. The first and third methods for creating the luminance matrix of the first, second and third embodiments are not covered by the claims. Embodiments described with respect to figures 11-22 are to be regarded as exemplary embodiments which are not covered by the claims.

### First Embodiment

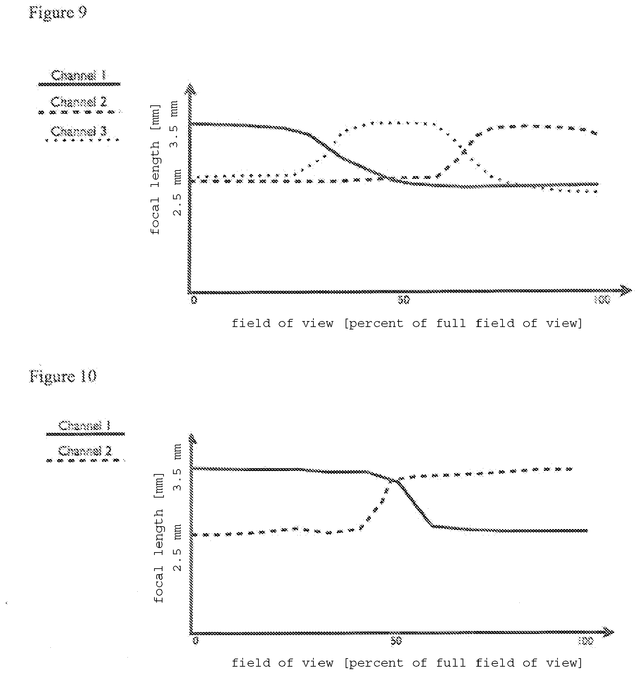

In a first embodiment a system with 3 (three) imaging channels each having a different color filters integrated within the imaging channel with transmission of Red, Green and Blue. All imaging channels have the same diagonal field of view. In this embodiment the lenses of the imaging channels were designed to have higher magnification at different area of the image. The higher magnification is introduced by geometric distortion Fig 9 illustrates a graph of focal length versus field of view in which the focal length of each imaging channels is higher at a part of the field of view.

The imaging channel (channel 1 in figure 9) including a Green color filter demonstrates higher magnification at the center of the field of view, The imaging channel (channel 2 in figure 9) including a Red color filter demonstrates higher magnification between the central area of the field of view and the up to an area close to the corner of the field of view. The imaging channel (channel 3 in figure 9) including a Blue color filter demonstrates higher magnification at the corner of the field of view.

Figure 9 illustrates the focal length variation as a function of field of view for the three lenses of the first embodiment. As seen in the graph at any given field of view at least one imaging channel images the scene with a higher focal length and therefor higher magnification.

After capturing of the images or during the readout, the image of each imaging channel is corrected for distortion and upscaled by some factor greater than 1 after which a luminance matrix is created according to one of the two methods:
1. At each area of the final image that can be one or more pixels in size, the source of luminance is chosen from one of the three imaging channels according to predefined table that for each area selects the source of luminance according to the imaging channel having the highest magnification in the said area.
2. By comparing sharpness of each area or detail in the three imaging channels and choosing the sharpest one as the source of luminance.

In both cases a chrominance matrix is also created using the distortion corrected upscaled images of the three imaging channels.

The luminance and chrominance matrix contain sufficient information as a color image. Converting the luminance and chrominance in to other image formats such as RGB, YUV or any other known format is not described here but is a well known procedure.

### Second Embodiment:

In a second embodiment a system with 4 (four) imaging channels each having a different color filters integrated within the imaging channel with transmission of Red, Green and Blue and White, in which the later is a filter having wider spectral transmission compared to the Red, Green and Blue. All imaging channels have the same diagonal field of view. In this embodiment the lenses of the imaging channels that include the Red, Green and Blue were designed to have higher magnification at different area of the image. The higher magnification is introduced by geometric distortion Figure 9 illustrates a graph of focal length versus field of view in which the focal length of each imaging channels is higher at a part of the field of view. The White channels has none or low distortion resulting in uniform magnification as a function of field.

The imaging channel (channel 1 in figure 9) including a Green color filter demonstrates higher magnification at the center of the field of view, The imaging channel (channel 2 in figure 9) including a Red color filter demonstrates higher magnification between the central area of the field of view and the up to an area close to the corner of the field of view. The imaging channel (channel 3 in figure 9) including a Blue color filter demonstrates higher magnification at the corner of the field of view.

Figure 9 illustrates the focal length variation as a function of field of view for the three lenses of the second embodiment. As seen in the graph at any given field of view at least one imaging channel images the scene with a higher focal length and therefor higher magnification.

After capturing of the images or during the readout, the images of the imaging channel that include color filters are corrected for distortion and upscaled by a factor of 2 after which a luminance matrix is created according to one of the three methods:
1. At each area of the final image that can be one or more pixels in size, the source of luminance is chosen from one of the three imaging channels according to predefined table that for each area selects the source of luminance according to the imaging channel having the highest magnification in the said area.
2. By comparing sharpness of each area or detail in the three imaging channels and choosing the sharpest one as the source of luminance.
3. By using the image of the imaging channel that includes a white channel. The image has low distortion which can be digitally corrected as the color channels.

A smart algorithm can choose to use one of the above three methods for computing the luminance matrix by determining the amount of light in a scene. The amount of light can be estimated by the exposure time and the signals or average signal in the image of one or more imaging channels.

In case of low lighting conditions it is preferred to use the third method of creating the luminance matrix using the white channel only as this channel will demonstrate a higher signal-to-noise ratio which leads to lower noise in the final image.

The decision can be done on a global level or on a pixel or area level allowing the use of information from all four imaging channels for creating the luminance matrix. In this case the luminance of bright areas in the scene will be created using one of the three color channels and luminance at darker areas will be created using information from the white channel.

In both cases a chrominance matrix is also created using the distortion corrected upscaled images of the three imaging channels or using the four channels.
The luminance and chrominance matrix contain sufficient information as a color image. Converting the luminance and chrominance in to other image formats such as RGB, YUV or any other known format is not described here but is a well known procedure.

### Third Embodiment:

In a third embodiment a system with 2 (two) imaging channels both using the same spectrum. One of the imaging channels was designed to have higher magnification at the central area of the image and the other imaging channel was designed to have higher magnification at the peripheral area on the image. The higher magnification is introduced by geometric distortion.

Figure 10 illustrates the focal length variation as a function of field of view for the two lenses of the third embodiment. As seen in the graph at any given field of view at least one imaging channel images the scene with a higher focal length and therefor higher magnification.

After capturing of the images or during the readout, the images of the two imaging channel are corrected for distortion and upscaled by a factor that is greater than 1 after which a combined image is created according to one of the three methods:
1. At each area of the final image that can be one or more pixels in size, the source image is chosen from one of the two imaging channels according to predefined table that for each area selects the source image according to the imaging channel having the highest magnification in the said area.
2. By comparing sharpness of each area or detail in the two imaging channels and choosing the sharpest one as the source.

Figure 11 schematically shows an embodiment of a section of multi aperture digital camera, i.e. a lens package 1100. The lens package 1100 comprises an image capturing element 1101, e.g. a Charge Coupled imaging Device (CCD) or a CMOS imaging device. In general such an image capturing element 1101 is referred to as a solid-state image sensor (SSIS). The image capturing element 1101 converts optical images of the subject formed by the lens elements of the lens array 1103 into an image signal (data). The image capturing element 1101 is mounted on a substrate (not shown) and comprises a cover 1102 for protecting the sensor against the environment. The lens array 1103 is housed in a lens holder 104, and the lens holder 1104 is provided with a cover plate 1105. The lens holder 1104 has the function of a spacer as well, because the lens array 1103 is supported by the lens holder 1104. The height of this support determines for a dominant part the distance between the lens array 1103 and the sensor 1101. The cover plate may include optionally baffle. Light falls into the cover plate 1105 and travels through the lens array 1103 to the sensor 1101. The individual parts may be bonded by an adhesive layer (not shown). Preferably, the one or more adhesive layers are rim-shaped, the adhesive material being present outside an area coinciding with the projection of the circumference of the lens elements present in the lens array.

Figure 12 schematically shows an exploded view of the individual parts shown in Figure 11.

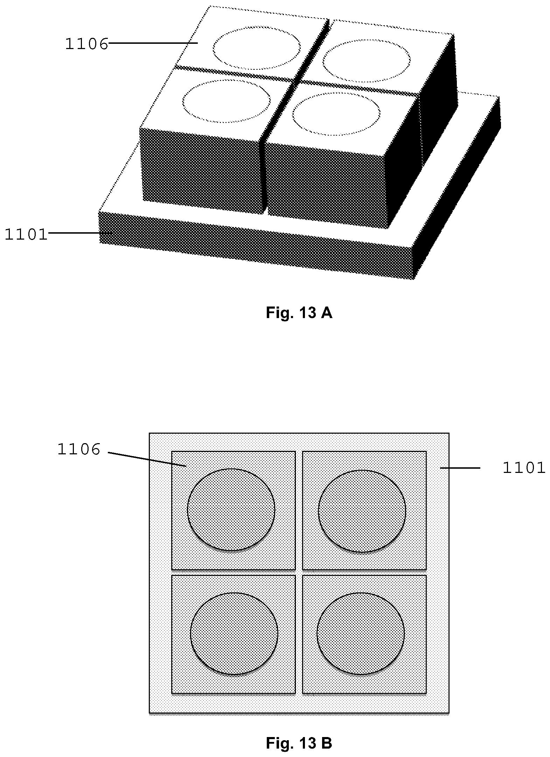

Figure 13A schematically shows individual lens elements 1106 in a 2x2 array placed on a sensor 1101.

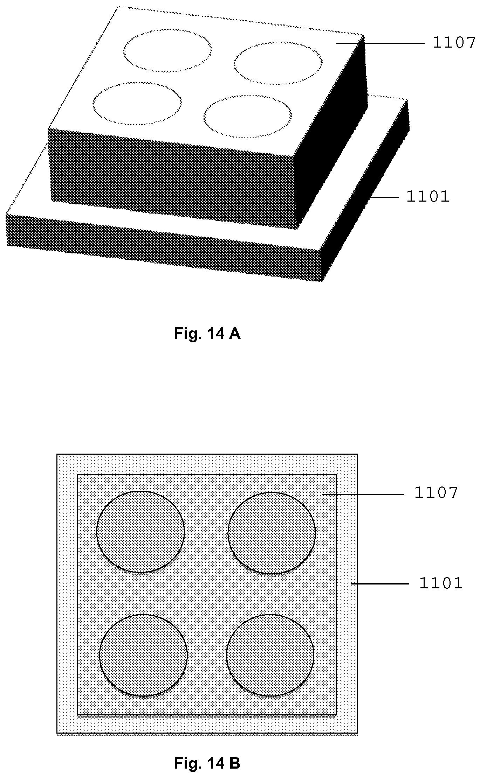

Figure 13B schematically shows a top view of the 2x2 array shown in Figure 13A. Figure 14A schematically shows one lens element 1107 in a 2x2 array, i.e. a 2x2 integrated lens element placed on a sensor.

Figure 14B schematically shows a top view of the integrated 2x2 array shown in Figure 14A.

The present invention is not restricted to a 2x2 array construction but other configuration are possible as well, like (please mention the types of arrays).

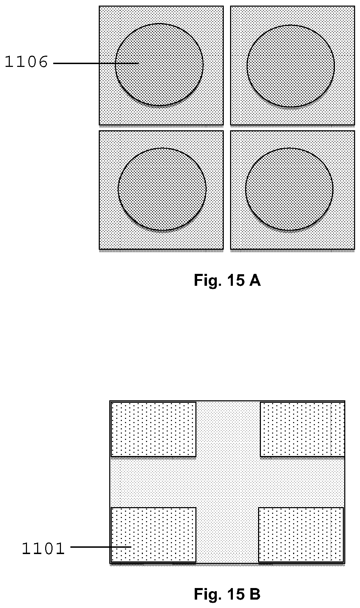

Figures 15A, 16A, and 17A, 18, 19 schematically show a construction of different sizes of the lenses 1106 in a lens array.

Figures 15B, 16B, and 17B schematically show the sensors 1101 to be used in connection with the lenses shown in Figures 15A, 16A, and 17A, respectively. Although Fig Z relates to individual lens elements in a 2x2 array, other configurations, e.g. integrated constructions, are possible as well, like nxm array, wherein n and m are integers. In addition different sizes and shapes of the lenses are possible.

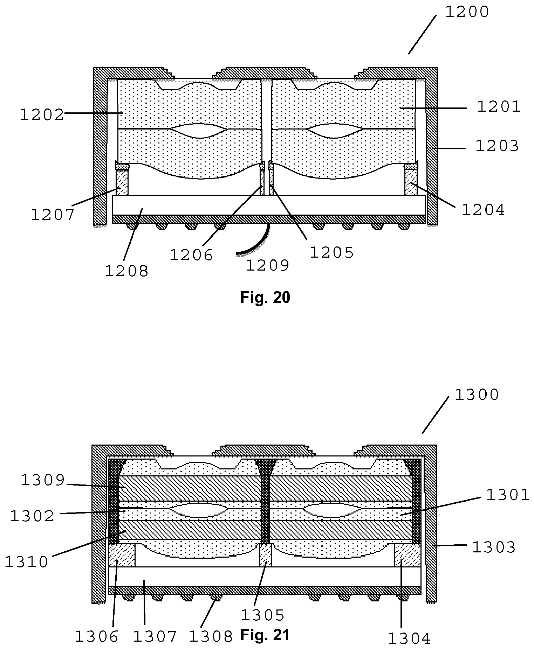

Figure 20 schematically shows another embodiment of a section of multi aperture digital camera, i.e. a lens package 1200. Individual arrays 1201, 1202 comprising lens elements are positioned within a housing 1203, and spacers 1204, 1205, 1206, 1207 are located on the sensor cover 1208 mounted on sensor 1209. The bonding between the spacers 1204, 1205, 1206, 1207 and the sensor cover 1208 is through an adhesive. An adhesive is also present between the spacers 1204, 1205, 1206, 1207 and the respective arrays 1201, 1202. (Remark: spacer 1204 and 1205 are same spacer, also same is valid for 1206 and 1207)

Figure 21 schematically shows another embodiment of a section of multi aperture digital camera, i.e. a lens package 1300. Individual arrays 1301, 1302 comprising lens elements are positioned within a housing 1303, and spacers 1304, 1305, 1306 are located on the sensor cover 1307 being mounted on sensor 1308. The bonding between the spacers 1304, 1305, 1306 and the sensor cover 1307 is through an adhesive. An adhesive is also present between the spacers 1304, 1305, 1306 and the arrays 1301, 1302. The polymer based lens elements are provided on transparent substrates 1309, 1310 via replication technology. Examples of transparent substrates are glass, polymers, quartz, ceramics, sapphire, crystalline alumina, Yttria, yttrium aluminium garnet (YAG). The lens package 1300 also includes light-shielding walls for preventing crosstalk between light beams passing through adjacent lens elements of the lens array 1301, 1302. The replicated lenses may be provided with one ore more additional layers, such as color filters, diaphragms, infra red reflecting layer, anti reflection layer (not shown). These additional layers can be present between the substrates 1309, 1310 and the lens element replicated thereon. The lens elements of the lens array 1301, 1302 can have different shapes, thicknesses, air space thicknesses, polymer materials and aperture dimensions.

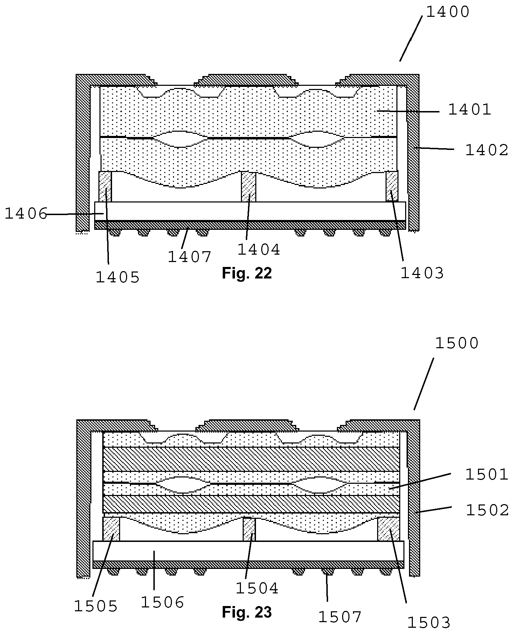

Figure 22 schematically shows another embodiment of a section of multi aperture digital camera, i.e. a lens package 1400. Array 1401 comprising lens elements is positioned within a housing 1402, and spacers 1403, 1404, 1405 are located on the sensor cover 1406 being mounted on sensor 1407. The bonding between the spacers 1403, 1404, 1405 and the sensor cover 1406 is through an adhesive. An adhesive is also present between the spacers 1403, 1404, 1405 and the array 1401.

Figure 23 schematically shows another embodiment of a section of multi aperture digital camera, i.e. a lens package 1500. Array 1501 comprising lens elements is positioned within a housing 1502 and spacers 1503, 1504, 1505 are located on the sensor cover 1506 being mounted on sensor 1507. The bonding between the spacers 1503, 1504, 1505 and the sensor cover 1506 is through an adhesive. An adhesive is also present between the spacers 1503, 1504, 1505 and the array 1501. The polymer based lens elements are provided on transparent substrates 1508, 1509 via replication technology. Examples of transparent substrates are glass, polymers, quartz, ceramics. sapphire, crystalline alumina, Yttria, yttrium aluminum garnet (YAG).

Suitable wafer level optics technologies are disclosed in WO2004027880A2. Suitable replication technologies are disclosed in U.S. patents Nos. 6,773,638 and 4,890,905. The replica layer used in the present optical system is preferably composed of a UV curable polymer, selected from the group of polycarbonates, polystyrenes, poly(meth)acrylates, polyurethanes, polyamids, polyimids, polyethers, polyepoxides and polyesters. A replica layer is obtained by using a replication method in which use is made of a mould having a precisely defined surface, for example an aspherical surface, wherein a small amount of a radiation-curable resin, for example a UV curable resin, is applied to the mould surface. Subsequently, the resin is spread over the mould surface, so that the cavities present in the mould are filled with the resin, whereupon the whole is subsequently irradiated for curing the resin and the thus cured product is removed from the mould. The cured product is a negative of the mould surface. An advantage of the replication process is that lenses having an intricate refractive surface, such as an aspherical surface, can be produced in simple manner, without complicated processes of grinding and polishing the lens body being required. In addition to that, the replica layer is durably joined to the surface to which the replica layer is applied, without adhesives being used. In addition, there is no occurrence of so-called "air gaps", which lead to large refractive index transitions between the surface and the air layer that is present.

Suitable UV curable compositions are: polycarbonates, including diethylene glycolbis-(allyl)carbonate, polystyrenes, including polychlorine styrene, polyacrylates, such as poly(trifluoroethyl methacrylate), poly(isobutyl methacrylate), poly(methylacrylate), poly(methyl methacrylate), poly(alphamethyl bromium acrylate), poly(methacrylic acid)-2,3-dibromium propylpoly(phenyl methacrylate poly(pentachlorine phenyl-methacrylate polymer), polyester compounds such as diallylphthalate, poly(vinyl-benzoate), poly(vinylnaphthalene), poly(vinylcarbazole) and silicones in the form of various types of resin materials, as well as acrylic resin, urethane resin, epoxy resin, enthiol resin or thiourethane resin or photopolymer.
Exposure preferably takes place with an intensity of between 100 en 2000 W/cm<2>, in particular 700 W/cm<2>, and a dose of 1 - 15 J/cm<2>, in particular 7 J/cm<2>, a wavelength in the 320-400 nm range and an exposure time of 1-60 seconds, in particular 10 seconds.

Suitable UV curable adhesive compositions include GAFGARD233 (marketed by DuPont, type vinylpyrrolidone), Norland Inc. NOA-61 , NOA-63, NOA-65, Three bond AVR-100 and Sony Chemical UV-1003, possibly provided with the usual additives such as initiators, reactive or nonreactive dilutants, crosslinking agents, fillers, pigments and anti-shrinkage agents.

Spacers mentioned in the Figures are made of a rigid material, for example glass, silicon or a composite material such as FR4. In an embodiment the spacer plate is so configured that it will not interfere with the light path through the two separate lens elements, The spacer plate comprises an opening which is positioned coaxially with a main optical axis of the lens element in question, whilst in a special embodiment the side of said opening is provided with an anti-reflective coating.

The color filters, Infrared blocking filters, apertures and antireflection coatings on the substrates or lens surfaces can be manufactured according to well known industrial processes, like coating processes chemical vapor deposition, physical vapor deposition.

Suitable technologies regarding a multi- aperture camera through assembling discrete optical elements, lens housing and optical blocking structures are disclosed in US2010/0127157, and US2010/0039713.

The optical elements can be manufactured through injection molding or glass molding of a thermoplast or pressing a glass preshape in a single cavity or plural cavity mold.

Suitable technologies for manufacturing present cover plate and present lens holder for wafer level optics camera are disclosed in US2010/0052192, US2009/0321861 and US2010/0117176.

Alternatively lens holder, cover plate can be provided through assembling injection molded, ceramic or metal housing. Sumitomo Bakelite: X83563-,X84179, G750L-B

Typical sizes for the present camera module height is about 4-10mm, for camera module foot print; 4x4mm to 20x20 mm. The dimension is not necessarily square, but in special embodiments also constructions of different sizes are possible, e.g. 4x10mm. According to an embodiment the image sensor package is within the range of 0.4 - 0,8mm. Dimensions of lens diameters are within a range of 2-4 mm, glass substrates within a range of 0.200-1 mm. For the replicated lenses one may apply a sag height in a range of 20 µ - 250µ, or even in a range of 500 -1000 µ. Typical dimensions for a buffer layer are 30 µ - 100µ.

## Claims

1. A multi-lens camera system for improving image spatial resolution comprising:
a first lens configured to direct light collected from a field of view onto a first image sensor portion, the collected light comprising light from a first portion of the field of view that is magnified by the first lens according to a first geometric distortion function;
a second lens configured to direct light collected from the field of view onto a second image sensor portion, the collected light comprising light from a second portion of the field of view that is magnified by the second lens according to second geometric distortion function wherein the first lens and the second lens are configured to have higher magnification at different areas of the field of view; and
an image sensor comprising the first image sensor portion and the second image sensor portion and configured to capture light incident upon the first image sensor portion and the second information sensor portion to form the first and second image portions; and;
means configured to combine luminance information from the magnified light from the first portion of the field of view and luminance information from the magnified light from the second portion of the field of view to form combined luminance information for the final image, by comparing the sharpness of each of said different areas in the first and second image portions and choosing the sharpest one as the source of luminance for the final image.

2. The multi-lens camera system of claim 1, wherein the first geometric distortion function is different than the second geometric distortion function.

3. The multi-lens camera system according to any one or more of the claims 1-2, wherein each lens magnifies collected light responsive to the optical properties of the lens.

4. The multi-lens camera system according to any one or more of the claims 1-3, wherein the optical properties of each lens comprise one of: the shape of the lens, the thickness of the lens, the air space thickness of the lens, the lens materials, and the aperture dimensions of the lens.

5. The multi-lens camera system according to any one or more of the claims 1-4, wherein at least one of the lenses includes a chromatic filter.

6. The multi-lens camera system according to any one or more of the claims 1-5, wherein at least one of the lenses includes a polarizing filter.

7. A method for improving image resolution, comprising:
receiving, from a first lens configured to direct light collected from a field of view onto a first image sensor portion, collected light comprising magnified light from a first portion of the field of view;
receiving, from a second lens configured to direct light collected from the field of view onto a second image sensor portion, collected light comprising magnified light from a second portion of the field of view, wherein the first lens and the second lens are configured to have higher magnification at different areas of the field of view;
capturing the received light by the first image sensor portion and the second image sensor portion to form the first and second image portions; and
combining luminance information from the magnified light from the first portion and the magnified light from the second portion to form combined luminance information for the final image, by comparing the sharpness of each of said different areas in the first and second image portions and choosing the sharpest one as the source of luminance for the final image.

8. The method of claim 7, further comprising:
correcting the geometric distortion of the magnified light before generating the combined luminance image
generating image chrominance information based on the corrected magnified light from the first lens and the second lens, each light being differently colour filtered; and
generating the image based on the image luminance information and the image chrominance information.

9. The method according to any one or more of the claim 8 wherein the magnified light is upscaled before it is corrected.

10. The method according to any one or more of the claims 7-9, wherein each lens magnifies light according to a geometric distortion.

11. The method according to any one or more of the claims 8-10, wherein the geometrically distorted light comprises magnified collected light.

12. The method to any one or more of the claims 7-11, wherein each lens geometrically distorts collected light responsive to the optical properties of the lens.

13. The method of claim 12, wherein the optical properties of each lens comprise one of: the shape of the lens, the thickness of the lens, the air space thickness of the lens, the lens materials, and the aperture dimensions of the lens.

14. The method to any one or more of the claims 1-13, wherein at least one of the lenses includes a chromatic filter.

## Patentansprüche

1. Ein Mehrlinsen-Kamerasystem zum Verbessern der räumlichen Bildauflösung, umfassend:
eine erste Linse, die konfiguriert ist, um von einem Sichtfeld gesammeltes Licht auf einen ersten Bildsensorabschnitt zu lenken, wobei das gesammelte Licht Licht von einem ersten Abschnitt des Sichtfelds umfasst, das durch die erste Linse gemäß einer ersten geometrischen Verzerrungsfunktion vergrößert ist;
eine zweite Linse, die konfiguriert ist, um von dem Sichtfeld gesammeltes Licht auf einen zweiten Bildsensorabschnitt zu richten, wobei das gesammelte Licht Licht von einem zweiten Abschnitt des Sichtfelds umfasst, das durch die zweite Linse gemäß einer zweiten geometrischen Verzerrungsfunktion vergrößert ist, wobei die erste Linse und die zweite Linse so konfiguriert sind, dass sie in unterschiedlichen Bereichen des Sichtfeldes eine stärkere Vergrößerung aufweisen; und
einen Bildsensor, der den ersten Bildsensorabschnitt und den zweiten Bildsensorabschnitt umfasst und konfiguriert ist, um auf den ersten Bildsensorabschnitt und den zweiten Informationssensorabschnitt einfallendes Licht zu erfassen, um den ersten und zweiten Bildabschnitt zu bilden; und
Mittel, die konfiguriert sind, um Luminanzinformationen von dem vergrößerten Licht von dem ersten Abschnitt des Sichtfelds und Luminanzinformationen von dem vergrößerten Licht von dem zweiten Abschnitt des Sichtfelds zu kombinieren, um kombinierte Luminanzinformationen für das endgültige Bild zu bilden, durch Vergleichen der Schärfe jedes der unterschiedlichen Bereiche in den ersten und zweiten Bildabschnitten und Auswählen des Schärfsten als die Quelle von Luminanz für das endgültige Bild.

2. Mehrlinsen-Kamerasystem nach Anspruch 1, wobei sich die erste geometrische Verzerrungsfunktion von der zweiten geometrischen Verzerrungsfunktion unterscheidet.

3. Mehrlinsen-Kamerasystem nach einem oder mehreren der Ansprüche 1 bis 2, wobei jede Linse gesammeltes Licht als Reaktion auf die optischen Eigenschaften der Linse vergrößert.

4. Mehrlinsen-Kamerasystem nach einem oder mehreren der Ansprüche 1 bis 3, wobei die optischen Eigenschaften jeder Linse eines von Folgendem umfassen:
die Form der Linse, die Dicke der Linse, die Luftraumdicke der Linse, die Linsenmaterialien und die Öffnungsabmessungen der Linse.

5. Mehrlinsen-Kamerasystem nach einem oder mehreren der Ansprüche 1 bis 4, wobei mindestens eine der Linsen einen chromatischen Filter enthält.

6. Mehrlinsen-Kamerasystem nach einem oder mehreren der Ansprüche 1 bis 5, wobei mindestens eine der Linsen einen Polarisationsfilter aufweist.

7. Verfahren zur Verbesserung der Bildauflösung, umfassend:
Empfangen, von einer ersten Linse, die konfiguriert ist, um von einem Sichtfeld gesammeltes Licht auf einen ersten Bildsensorabschnitt zu richten, gesammeltes Licht, das vergrößertes Licht von einem ersten Abschnitt des Sichtfelds umfasst;
Empfangen, von einer zweiten Linse, die konfiguriert ist, um von dem Sichtfeld gesammeltes Licht auf einen zweiten Bildsensorabschnitt zu richten, gesammeltes Licht, das vergrößertes Licht von einem zweiten Abschnitt des Sichtfelds umfasst, wobei die erste Linse und die zweite Linse konfiguriert sind um eine stärkere Vergrößerung in unterschiedlichen Bereichen des Sichtfeldes aufzuweisen;
Erfassen des empfangenen Lichts durch den ersten Bildsensorabschnitt und den zweiten Bildsensorabschnitt zum Bilden des ersten und des zweiten Bildabschnitts; und
Kombinieren von Luminanzinformationen von dem vergrößerten Licht von dem ersten Abschnitt und dem vergrößerten Licht von dem zweiten Abschnitt, um kombinierte Luminanzinformationen für das endgültige Bild zu bilden, durch Vergleichen der Schärfe jedes der unterschiedlichen Bereiche in den ersten und zweiten Bildabschnitten und Auswählen des Schärfsten als die Quelle von Luminanz für das endgültige Bild.

8. Verfahren nach Anspruch 7, ferner umfassend:
Korrigieren der geometrischen Verzerrung des vergrößerten Lichts vor dem Erzeugen des kombinierten Luminanzbildes;
Erzeugen von Bildchrominanzinformationen basierend auf dem korrigierten vergrößerten Licht von der ersten Linse und der zweiten Linse, wobei jedes Licht unterschiedlich farbfiltriert ist; und
Erzeugen des Bildes basierend auf den Bildluminanzinformationen und den Bildchrominanzinformationen.

9. Verfahren nach einem oder mehreren der Ansprüche 8, wobei das Vergrößertes Licht hochskaliert wird, bevor es korrigiert wird.

10. Verfahren nach einem oder mehreren der Ansprüche 7 bis 9, wobei jede Linse Licht entsprechend einer geometrischen Verzerrung vergrößert.

11. Verfahren nach einem oder mehreren der Ansprüche 8 bis 10, wobei das geometrisch verzerrte Licht vergrößertes gesammeltes Licht umfasst.

12. Verfahren nach einem oder mehreren der Ansprüche 7 bis 11, wobei jede Linse gesammeltes Licht in Reaktion auf die optischen Eigenschaften der Linse geometrisch verzerrt.

13. Verfahren nach Anspruch 12, wobei die optischen Eigenschaften jeder Linse eines von Folgendem umfassen:
die Form der Linse, die Dicke der Linse, die Luftraumdicke der Linse, die Linsenmaterialien und die Öffnungsabmessungen der Linse.

14. Verfahren nach einem oder mehreren der Ansprüche 1 bis 13, wobei mindestens eine der Linsen einen chromatischen Filter beinhaltet.

## Revendications

1. Un système de caméra à lentilles multiples permettant d'améliorer la résolution spatiale d'une image, comprenant :
une première lentille configurée pour diriger sur une première partie de capteur d'image la lumière recueillie provenant d'un champ de vision, la lumière recueillie comprenant de la lumière provenant d'une première partie du champ de vision qui est agrandie par la première lentille conformément à une première fonction de distorsion géométrique ;
une seconde lentille configurée pour diriger sur une seconde partie de capteur d'image la lumière recueillie provenant du champ de vision, la lumière recueillie comprenant de la lumière provenant d'une seconde partie du champ de vision qui est agrandie par la seconde lentille en fonction d'une seconde fonction de distorsion géométrique, la première lentille et la seconde lentille étant configurées pour présenter un grandissement supérieur dans des zones différentes du champ de vision ; et
un capteur d'image comprenant la première partie de capteur d'image et la seconde partie de capteur d'image et configuré pour capturer la lumière frappant la première partie de capteur d'image et la seconde partie de capteur d'image pour former la première et la seconde partie d'image ; et
des moyens configurés pour combiner une information de luminance provenant de la lumière agrandie provenant de la première partie du champ de vision et une information de luminance provenant de la lumière agrandie provenant de la seconde partie du champ de vision pour former une information de luminance combinée pour l'image finale, par comparaison du piqué de chacune desdites zones différentes de la première et de la seconde partie d'image et choix de celle dont le piqué est le plus élevé comme source de luminance pour l'image finale.

2. Le système de caméra à lentilles multiples de la revendication 1, dans lequel la première fonction de distorsion géométrique est différente de la seconde fonction de distorsion géométrique.

3. Le système de caméra à lentilles multiples selon une ou plusieurs des revendications 1 à 2, dans lequel chaque lentille agrandit la lumière recueillie en réponse aux propriétés optiques de la lentille.

4. Le système de caméra à lentilles multiples selon une ou plusieurs des revendications 1 à 3, dans lequel les propriétés optiques de chaque lentille comprennent l'une d'entre : la forme de la lentille, l'épaisseur de la lentille, l'épaisseur de l'intervalle d'air de la lentille, les matériaux de la lentille, et les dimensions d'ouverture de la lentille.

5. Le système de caméra à lentilles multiples selon une ou plusieurs des revendications 1 à 4, dans lequel au moins l'une des lentilles inclut un filtre chromatique.

6. Le système de caméra à lentilles multiples selon une ou plusieurs des revendications 1 à 5, dans lequel au moins l'une des lentilles comprend un filtre polarisant.

7. Un procédé d'amélioration de la résolution d'une image, comprenant :
la réception, en provenance d'une première lentille configurée pour diriger sur une première partie de capteur d'image la lumière recueillie provenant d'un champ de vision, de la lumière recueillie comprenant de la lumière agrandie provenant d'une première partie du champ de vision ;
la réception, en provenance d'une seconde lentille configurée pour diriger sur une seconde partie de capteur d'image la lumière recueillie provenant du champ de vision, la lumière recueillie comprenant la lumière agrandie provenant d'une seconde partie du champ de vision, la première lentille et la seconde lentille étant configurées pour présenter un grandissement supérieur dans des zones différentes du champ de vision ;
la capture de la lumière reçue par la première partie de capteur d'image et par la seconde partie de capteur d'image pour former la première et la seconde partie d'image ; et
la combinaison d'une information de luminance provenant de la lumière agrandie provenant de la première partie et de la lumière agrandie provenant de la seconde partie pour former une information de luminance combinée pour l'image finale, par comparaison du piqué de chacune desdites zones différentes de la première et de la seconde partie d'image et choix de celle dont le piqué est le plus élevé comme source de luminance pour l'image finale.

8. Le procédé de la revendication 7, comprenant en outre :
la correction de la distorsion géométrique de la lumière agrandie avant la génération de l'image de luminance combinée ;
la génération d'une information de chrominance d'image en fonction de la lumière agrandie corrigée provenant de la première lentille et de la seconde lentille, chaque lentille étant filtrée par une couleur différente ; et
la génération de l'image en fonction de l'information de luminance d'image et de l'information de chrominance d'image.

9. Le procédé selon la revendication 8, dans lequel la lumière agrandie est augmentée d'échelle avant d'être corrigée.

10. Le procédé selon une ou plusieurs des revendications 7 à 9, dans lequel chaque lentille agrandit la lumière en fonction d'une distorsion géométrique.

11. le procédé selon une ou plusieurs des revendications 8 à 10, dans lequel la lumière géométriquement distordue comprend la lumière collectée agrandie.

12. Le procédé d'une ou plusieurs des revendications 7 à 11, dans lequel chaque lentille distord géométriquement la lumière collectée en réponse aux propriétés optiques de la lentille.

13. Le procédé de la revendication 12, dans lequel les propriétés optiques de chaque lentille comprennent l'une d'entre : la forme de la lentille, l'épaisseur de la lentille, l'épaisseur de l'intervalle d'air de la lentille, les matériaux de la lentille, et les dimensions d'ouverture de la lentille.

14. Le procédé d'une ou plusieurs des revendications 1 à 13, dans lequel au moins l'une des lentilles inclut un filtre chromatique.
